# FASCICULE DE BREVET EUROPEEN

(11) **EP 3 465 649 B1**
(45) Date de publication et mention de la délivrance du brevet: **19.02.2020**
(21) Numéro de dépôt: 17725982.7
(22) Date de dépôt: 29.05.2017
(51) Int. Cl.: G08C 17/02

(54) **SYSTÈMES COMPRENANT UN DRONE ET UNE ENTITÉ DE COMMANDE DE CE DRONE**
SYSTEM MIT EINER DROHNE UND EINER EINHEIT ZUR STEUERUNG DIESER DROHNE
SYSTEMS COMPRISING A DRONE AND AN ENTITY FOR CONTROLLING THIS DRONE

(30) Priorité: 02.06.2016 FR 1655044
(43) Date de publication de la demande: 10.04.2019
(73) Titulaire: Safran Electronics & Defense, 92100 Boulogne-Billancourt (FR)
(72) Inventeur: DUBRULLE, Sébastien, 92100 Boulogne Billancourt (FR)
(74) Mandataire: Lavialle, Bruno François Stéphane
(86) Numéro de dépôt international: PCT/EP2017/062936
(87) Numéro de publication internationale: WO 2017/207511

(56) Documents cités:
- US-A1- 2016 117 853

## Description

L'invention concerne le domaine des systèmes comprenant un drone et une entité de commande de ce drone, ainsi que le domaine des méthodes de communication entre un tel drone et cette entité de commande du drone.

### ARRIERE PLAN DE L'INVENTION

Il est connu un système comprenant un drone comprenant une entité embarquée à bord dudit drone, une entité de commande du drone située à distance du drone. L'entité de commande est reliée à une interface homme / machine et adaptée pour permettre à un opérateur de sélectionner des données à envoyer de l'entité de commande vers l'entité embarquée. L'entité embarquée est adaptée à recevoir des données envoyées par l'entité de commande et à exécuter des actions en fonction des données ainsi reçues par l'entité embarquée.

Un tel système est par exemple décrit dans la
publication US 2016/117853.

Il a été constaté que dans certains cas le drone peut réaliser des actions catastrophiques pour sa sureté ainsi que pour la sureté de son environnement.

Afin de sécuriser le système, des éléments / composants du système peuvent être certifiées suivant des normes de criticité. Ces opérations de certification sont utiles mais couteuses.

### OBJET DE L'INVENTION

Un objet de la présente invention est de fournir un système et une méthode de communication du type précité permettant de répondre à certains au moins des problèmes précités.

### RESUME DE L'INVENTION

A cet effet, suivant l'invention, il est proposé un système comprenant un drone comprenant une entité embarquée à bord dudit drone, une entité de commande du drone située à distance du drone, l'entité de commande étant reliée à une interface homme / machine adaptée pour permettre à un opérateur de sélectionner des données à envoyer de l'entité de commande vers l'entité embarquée. L'entité embarquée est adaptée à recevoir des données envoyées par l'entité de commande (ces données envoyées sont au moins en partie représentatives des données sélectionnées par l'opérateur) et à exécuter des actions en fonction des données ainsi reçues par l'entité embarquée.

Le système suivant l'invention est, essentiellement caractérisé en ce que :
- l'entité embarquée est agencée pour générer un message à partir des données reçues par l'entité embarquée et transmettre ce message à l'entité de commande ;
- l'entité de commande est agencée pour commander à des moyens d'alerte la génération d'un signal d'information représentatif dudit message transmis par l'entité embarquée et reçu par l'entité de commande ;
le système comportant en outre des moyens de validation reliés à l'entité de commande, l'entité de commande étant en outre agencée pour, en fonction d'une action de l'opérateur sur lesdits moyens de validation intervenue après la génération dudit signal d'information, transmettre à l'entité embarquée un message d'intention; l'entité embarquée étant agencée pour conditionner, en fonction dudit message d'intention, l'exécution desdites actions.

Pour la compréhension de l'invention, le terme « relié » utilisé dans la présente demande implique une liaison permettant le transfert de données, signaux, messages, ainsi cette liaison n'est pas forcément mécanique via un câble de transmission, mais elle peut aussi être sans fils par exemple via une liaison radio.

En cas de défaillance de l'interface homme / machine, ou en cas d'erreur de sélection par l'opérateur, il y a un risque que les données sélectionnées soient corrompues ou erronées ce qui peut conduire à la transmission de données corrompues / erronées vers l'entité embarquée. Il y aurait un risque de dysfonctionnement du drone si l'entité embarquée exécutait des actions résultants de données corrompues ou erronées.

Grâce à l'invention, un message est généré par l'entité embarquée à partir des données qu'elle a reçues de l'entité de commande. Ce message est alors transmis à l'entité de commande qui commande la génération d'un signal d'information représentatif du message, c'est-à-dire représentatif du contenu de ce message.

En fonction de ce signal d'information, l'opérateur est informé et peut alors agir sur des moyens de validation qui sont reliés à l'entité de commande.

En fonction de cette action de l'opérateur sur les moyens de validation, l'entité de commande génère et transmet un message d'intention qui est transmis à l'entité embarquée. Ce message d'intention est représentatif de l'intention de l'opérateur sur la question de savoir s'il souhaite ou non que les actions qui correspondent au message d'information soient exécutées.

L'entité embarquée, à réception de ce message d'intention conditionne l'exécution des actions.
Le système selon l'invention, de la même manière que la méthode selon l'invention permettent de transmettre des instructions / des données sélectionnées par l'opérateur vers un drone tout en limitant le risque que ce drone n'exécute des actions incohérentes ou erronées puisque l'utilisateur à la possibilité de valider ces actions s'il considère que le signal d'information qu'il reçoit est bien cohérent avec les données qu'il avait préalablement sélectionnées.

La réception de ce message d'intention permet selon le cas de valider ou annuler les instructions / données préalablement transmises au drone ce qui revient à utiliser le message d'intention pour conditionner l'exécution des actions correspondantes.

En l'absence de réception de ce message d'intention l'entité embarquée n'autorise pas l'exécution des actions. Le système est ainsi sécurisé.
Par ailleurs, comme cela sera expliqué ci-après, ce système selon l'invention est avantageux en ce qu'il permet de limiter les frais de certification du système. En effet, grâce à l'invention, l'interface homme / machine et le moyen d'alerte peuvent être des éléments non certifiés suivant une norme de criticité, ce qui limite le coût de développement et de fabrication du système en réduisant le nombre et la complexité des éléments du système à certifier. Par exemple les moyens d'alerte peuvent comporter un casque audio et/ou des moyens de génération de voix IP et/ou un afficheur visuel permettant par exemple d'afficher un texte constituant le signal d'information de type texte. Selon le mode de réalisation choisi, les moyens d'alerte peuvent être ou ne pas être certifiés.

Selon un autre aspect, l'invention concerne aussi une méthode de communication entre une entité de commande d'un drone située à distance du drone et une entité embarquée à bord dudit drone, l'entité de commande étant reliée à une interface homme / machine pour permettre à un opérateur de sélectionner des données à envoyer de l'entité de commande vers l'entité embarquée, l'entité embarquée à bord du drone étant adaptée à recevoir des données envoyées par l'entité de commande (ces données envoyées sont au moins en partie représentatives des données sélectionnées par l'opérateur) et à exécuter des actions en fonction des données ainsi reçues par l'entité embarquée.

La méthode suivant l'invention est, essentiellement caractérisée en ce que préalablement à l'exécution desdites actions :
- l'entité embarquée transmet un message à l'entité de commande, ce message étant généré à partir des données reçues par l'entité embarquée ; puis
- l'entité de commande, commande à des moyens d'alerte, la génération d'un signal d'information à l'attention de l'opérateur, ce signal d'information étant représentatif dudit message transmis par l'entité embarquée et reçu par l'entité de commande ; puis
- en fonction d'une action de l'opérateur sur des moyens de validation reliés à l'entité de commande, l'entité de commande transmet à l'entité embarquée un message d'intention ; puis
- en fonction dudit message d'intention, l'entité embarquée conditionne l'exécution desdites actions fonctions desdites données préalablement reçues par l'entité embarquées.

La méthode selon l'invention présente les mêmes avantages que ceux précités en référence au système selon l'invention.

Dans un mode de réalisation particulier de la méthode de communication suivant l'invention, l'interface homme / machine comporte :
- des moyens de sélection choisis parmi des moyens de sélection tactile ou des moyens de sélection par commande vocale ; et
- au moins un moyen d'affichage pour afficher les données sélectionnées à l'aide de l'interface homme / machine ; et les moyens d'alerte comportent au moins un haut-parleur pour délivrer ledit signal d'information à l'attention de l'opérateur, ce signal d'information étant un signal de type texte ou de type audio.
Comme cela sera détaillé ci-après, le fait d'avoir un moyen d'affichage visuel pour afficher les données sélectionnées et d'autre part des moyens d'alerte pour délivrer le signal d'information de type texte et/ou audio représentatif des données contenues dans le message reçu par l'entité embarqué permet à l'opérateur de comparer des données affichées (c'est-à-dire les données qu'il a sélectionnées) avec les données du signal d'information qu'il lit via l'afficheur visuel de texte ou entend via le haut-parleur (Ce signal d'information de type texte ou audio est représentatif des données reçues et interprétées au niveau de l'entité embarquée).
Ceci facilite la détection d'une éventuelle corruption des données entre la sélection et l'interprétation par l'entité embarquée. Il est également possible que le signal d'information soit à la fois de type texte et de type audio.

L'afficheur visuel de texte peut être dédié au seul affichage du signal d'information ou, si nécessaire, être intégré au moyen d'affichage de l'interface homme/machine qui sera décrite ci-après dans la « description détaillée de l'invention ».

Selon un autre mode de réalisation, de la méthode de communication selon l'invention, l'entité de commande, l'entité embarquée et les moyens de validation sont choisis pour être certifiés conformément à au moins une norme de criticité et l'interface homme / machine et les moyens d'alerte ne sont pas certifiés conformément à cette au moins une norme de criticité.

Ce mode est avantageux car il permet de limiter les coûts et efforts à déployer pour certifier le système sans pour autant compromettre la fonction de détection d'éventuelles corruptions de données dans le système. En effet, il n'est pas ici nécessaire de certifier l'interface homme / machine ou les moyens d'alerte qui peuvent dès lors être des éléments standards économiques.

### BREVE DESCRIPTION DES DESSINS

L'invention sera mieux comprise à la lumière de la description qui suit de l'invention, en référence aux figures annexées dans lesquelles :

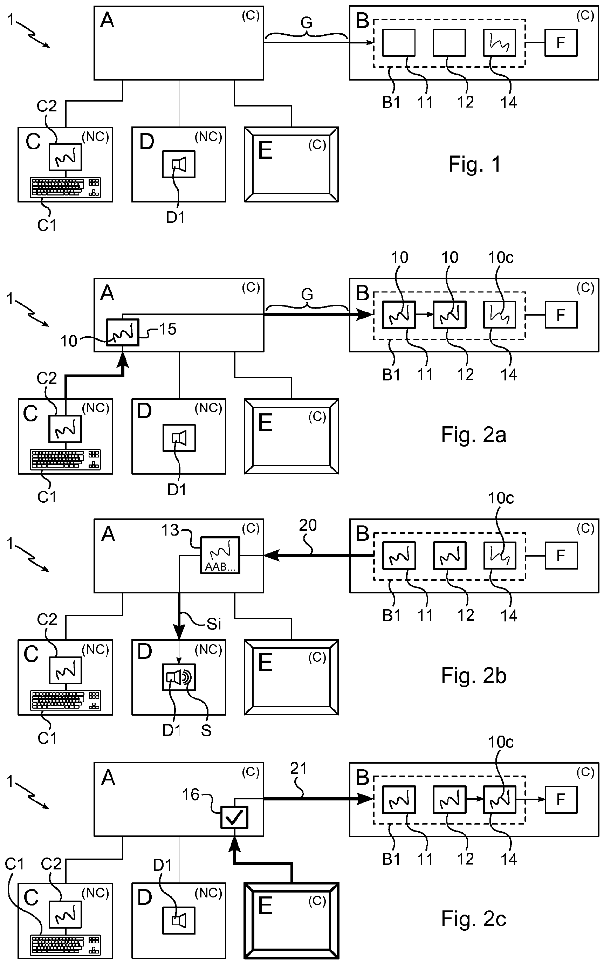

- la figure 1 décrit le système selon l'invention doté d'un drone et d'une entité de commande qui communiquent entre eux via des signaux préférentiellement hertziens;
- la figure 2a illustre une première étape de la méthode de communication entre l'entité de commande et le drone dans laquelle l'entité de commande transmet des données au drone qui sont représentatives de données préalablement sélectionnées par un opérateur à l'aide d'une interface homme / machine ;
- la figure 2b illustre une seconde étape de la méthode de communication selon l'invention dans laquelle l'entité embarquée sur le drone transmet un message à l'entité de commande, en réponse et en fonction des données préalablement reçu par l'entité embarquées et provenant de l'entité de commande ;
- la figure 2c illustre une troisième étape de la méthode selon l'invention dans laquelle, après avoir lu le signal de type texte et/ou entendu un signal de type audio représentatif du message préalablement transmis par l'entité embarquée et après validation par l'opérateur, l'entité de commande transmet un message d'intention à l'entité embarquée qui validera l'exécution d'actions, par des actionneurs du drone et le système de commande de vol (Flight Control System).

### DESCRIPTION DETAILLEE DE L'INVENTION

Comme indiqué précédemment, l'invention concerne essentiellement un système 1 illustré à la figure 1 et comprenant :
- un drone B comprenant une entité embarquée B1 à bord dudit drone B ; et
- une entité de commande A du drone située à distance du drone B.

L'entité de commande A et l'entité embarquée B1 du drone B communiquent entre eux via un système de transfert de données G illustré par un trait de transfert de données. Ce système de transfert de données peut comporter une carte de communication appartenant à l'entité de commande A, une carte de communication appartenant à l'entité embarquée B1 et un câble de transfert de données reliant entre elles ces cartes de communication. Alternativement, dans un mode de réalisation sans câble de transfert de données, ces cartes de communication peuvent être configurées pour communiquer entre elles via des ondes électromagnétiques.

L'entité de commande A étant reliée à une interface homme / machine C,
Préférentiellement, l'interface homme / machine C comporte :
- des moyens de sélection C1 choisis parmi des moyens de sélection tactile tel un clavier ou un dispositif de pointage pour ordinateur ou des moyens de sélection par commande vocale ; et
- au moins un moyen d'affichage C2 tel un écran d'affichage pour afficher les données 10 sélectionnées à l'aide de l'interface homme / machine C.

Cette interface homme / machine C est adaptée pour permettre à l'opérateur de sélectionner des données 10 à envoyer de l'entité de commande A vers l'entité embarquée B1.

Les données sélectionnées par l'opérateur peuvent être des données influençant un changement de position ou de trajectoire du drone ou des données critiques pour différentes fonctions de vol du drone. Parmi ces données on pourra par exemple trouver une position à atteindre par le drone telle qu'une altitude ou une coordonnée dans l'espace, ou une trajectoire à suivre par le drone. Ces données peuvent aussi être d'un autre type.

Ces données sont critiques en ce que si elles étaient exécutées par l'entité embarquée sans être validées par l'opérateur, elles pourraient conduire à une action catastrophique pour le drone.

Ces données sont envoyées à l'aide du système de transfert de données G. Ces données peuvent être des données critiques telles qu'un ordre de déplacement du drone vers un point donné et/ou une trajectoire à suivre. Par données critique, on entend des données susceptibles de mettre en péril le drone ou son environnement si ces données sont exécutées par des actionneurs F du drone B.

L'entité embarquée B1 du drone est adaptée à recevoir certaines au moins desdites données 10 envoyées par l'entité de commande et à exécuter des actions en fonction des données 10 ainsi reçues par l'entité embarquée B1. De telles actions peuvent être un déplacement de gouvernes ou de pales ou de roues permettant de déplacer tout ou partie du drone.

A partir des données 10 transmises par l'entité de commande A et reçues par l'entité embarquée B1, l'entité embarquée B1 génère et transmet un message 20 à l'entité de commande A. Ce message 20 est transmis à l'aide dudit système de transfert de données G.

L'entité de commande A commande, à des moyens d'alerte D auxquels elle est reliée, la génération d'un signal d'information S représentatif dudit message 20 transmis par l'entité embarquée B1 et reçu par l'entité de commande A.

Ce signal d'information S est porté à l'attention de l'opérateur et à l'aide de moyens de validation E qui sont aussi reliés à l'entité de commande A, l'opérateur peut interagir avec l'entité de commande en fonction du signal d'information S qu'il vient d'écouter.

En fonction d'une action de l'opérateur sur lesdits moyens de validation E intervenue après la génération dudit signal d'information S, l'entité de commande A transmet à l'entité embarquée B1 un message d'intention 21 de l'opérateur, qui est ici un message de validation. De la même manière que précédemment, ce message 21 est transmis via le système de transfert de données G.

Selon un autre mode de réalisation particulier, en fonction d'une autre action de l'opérateur sur lesdits moyens de validation ou sur l'interface homme / machine C, l'entité de commande A peut envoyer un message d'intention 21 qui est un message d'annulation à l'entité embarquée B1.

L'entité embarquée B1 est agencée pour conditionner, en fonction de ce message d'intention 21, l'exécution des actions par les actionneurs F du drone. Ces actions sont le résultat de l'exécution par les actionneurs F de certaines au moins des données 10 préalablement sélectionnées par l'opérateur puis envoyées à l'entité embarquée B1 par l'entité de commande A.

Le fait que l'opérateur valide ou non l'exécution des actions par les actionneurs F du drone est avantageux car cela lui permet de s'assurer que les actions à réaliser ont bien été interprétées au niveau du drone et qu'il n'y a pas eu d'erreur de sélection des données ou une corruption de ces données entre la sélection et l'interprétation par l'entité embarquée B1.

Préférentiellement, les moyens d'alerte D comportent au moins un haut-parleur D1 pour délivrer à l'opérateur ledit signal d'information S représentatif dudit message 20, ce signal d'information S étant ici un signal de type audio.

Le fait que l'interface homme / machine C comporte un affichage C2 pour afficher les données sélectionnées 10 alors que les moyens d'alerte comportent au moins un haut-parleur D1 pour délivrer le signal d'information audio S permet à l'opérateur d'avoir en même temps une image de visualisation de sa sélection et un signal sonore S lui indiquant un résultat d'interprétation, par l'entité embarquée B1, des données 10 sélectionnées au niveau de l'entité de commande A. Ceci facilite la comparaison/ vérification de cohérence des données pour l'opérateur qui peut concentrer son attention visuelle sur les actions de sélection de données 10 et son attention auditive sur la seule question de la validation ou de l'annulation des données interprétées au niveau de l'entité embarquée B1.

Les moyens d'alerte D peuvent comporter un afficheur textuel pour délivrer à l'opérateur ledit signal S représentatif dudit message 20, ce signal d'information S étant ici un signal de type texte.

Comme le message 20 transmis par l'entité embarquée B1 est dans un format distinct du signal S, de type audio et/ou de type texte délivré à l'opérateur, cela implique un changement de format entre le message 20 et le signal d'information S délivré. Si les données sont corrompues le signal d'information S délivré est soit incompréhensible soit absent. L'opérateur peut ainsi facilement détecter des données corrompues et il peut décider de ne pas en valider l'exécution des actions correspondantes.

Le risque d'erreur d'interprétation par l'opérateur s'en trouve réduit. Il serait difficile pour l'opérateur de percevoir deux zones d'affichage de natures différentes et présentant les mêmes données ce qui n'est pas le cas en combinant l'affichage des données 10 et la diffusion du signal S de type audio et/ou de type texte.

Idéalement, l'entité de commande A comporte un dispositif d'interprétation agencé pour interpréter le message 20 généré par l'entité embarquée B1 et pour délivrer aux moyens d'alerte D un signal interprété Si par exemple de type texte. Le signal d'information S représentatif du message 20 transmis par l'entité embarquée B1 étant un signal de type texte (sous forme de texte) et/ou de type audio vocal. Ce signal d'information S résulte d'une part de l'interprétation du message 20 par le dispositif d'interprétation 13 et d'autre part d'une interprétation par les moyens d'alerte du signal interprété Si..

Le système selon l'invention peut aussi comporter un dispositif de synthèse vocale, préférentiellement implanté au niveau des moyens d'alerte D, pour à partir du signal interprété Si de type texte, synthétiser le signal d'information audio S. Ce signal d'information S est alors un message audio vocal.

Le signal d'information S est composé de mots formant un message (texte et/ou audio)représentatif des données 10 sélectionnées par l'opérateur et interprétés par l'entité embarquée B1. Ce message indique par exemple une position à atteindre par le drone, ou une trajectoire à suivre par le drone ou une action à exécuter.

Comme les moyens d'alerte délivrent un signal S de type texte et/ou de type audio vocal issu du dispositif d'interprétation on a un signal constitué de mots distincts qui présente une richesse sémantique. Cette richesse sémantique permet de supprimer le besoin de certification du signal d'alerte puisque la richesse de la parole est telle qu'il n'est pas possible de corrompre un mot avec une signification de manière à créer un autre mot ayant une autre signification. Il est par conséquent extrêmement avantageux d'utiliser un tel dispositif d'interprétation pour augmenter la sureté globale du système.

Avantageusement, le dispositif de synthèse vocale peut aussi être utilisé pour donner des informations sur l'état courant du drone, à partir de messages d'état courant délivrés par l'entité embarquée à l'entité de commande. Dans ce cas, les moyens d'alerte sont utilisés pour informer l'opérateur:
- d'une part, d'actions restant à exécuter s'il les valide, ces actions étant fonction des données 10 préalablement sélectionnées par l'opérateur ; et
- d'autre part d'état courant du drone, comme sa position actuelle ou sa trajectoire en cours ou sa destination cible.

L'opérateur peut ainsi vérifier la cohérence avec un état affiché sur l'interface Homme-Machine C (il peut par exemple vérifier la cohérence entre l'état actuel du drone et les actions à venir) et il peut soit valider les actions à venir en agissant sur des moyens de validation soit déclencher une procédure spécifique (par exemple sélectionner de nouvelles données en agissant sur l'interface homme / machine C).

Préférentiellement, les entités de commande A, l'entité embarquée B1 et les moyens de validation E sont certifiés (C) conformément à au moins une norme de criticité et l'interface homme / machine C et les moyens d'alerte D ne sont pas certifiés conformément à cette au moins une norme de criticité.

Dans le domaine de l'aéronautique, certains éléments d'un système peuvent être considérés comme des éléments critiques qui peuvent présenter un risque catastrophique.

Afin de s'assurer d'un niveau de sureté minimum, les éléments critiques sont développés et testés pour être certifiés conformément à des normes telles que des normes internationales.

Dans le cas présent ladite au moins une norme de criticité comporte :
- la norme DO-178 qui fixe les conditions de sécurité applicables aux logiciels critiques de l'avionique dans l'aviation commerciale et l'aviation générale ; et
- la norme DO-254 qui précise notamment les contraintes de développement liées à l'obtention de la certification d'un équipement électronique d'avionique.

La normalisation d'un élément est particulièrement longue et coûteuse. Les éléments certifiés sont identifiés sur les figures par la mention (C) et les éléments non certifiés par la mention (NC). Par non certifié, on entend non certifié au niveau catastrophique.

Comme indiqué précédemment, l'invention est particulièrement avantageuse en ce qu'elle permet à l'opérateur de décider s'il valide ou non les données préalablement reçues par l'entité embarquée B1 ce qui réduit la criticité de l'interface homme / machine. En conséquence, cette interface homme / machine C peut ne pas être certifiée ou ne pas être certifiée au niveau catastrophique (DAL A ou DAL B ou DAL C suivant les spécifications des autorités et le contexte d'emploi) ce qui permet alors de réduire coût de reviens et complexité technique.

Grâce à l'invention, on peut utiliser une interface homme / machine C non certifiée (NC) et donc de moindre coût.

Il en est de même pour les moyens d'alerte D qui ne sont pas non plus critiques (NC) pour la sécurité du système 1. En effet, en cas de dysfonctionnement des moyens d'alerte D, le message généré par l'entité embarquée B1 ne sera pas reçu par l'opérateur. L'opérateur n'effectuera pas d'action de validation et aucun message d'intention ne sera transmis. L'entité embarquée B1 n'autorisera pas l'exécution des actions qui correspondent aux données 10 préalablement sélectionnées par l'opérateur.

Ainsi le risque d'exécution d'une action erronée ou incohérente s'en trouve toujours réduit.

Par ailleurs, si l'opérateur constate que le moyen d'alerte ne génère pas de signal S en réponse à une sélection préalable de données, il en déduira alors que l'un des éléments non certifiés du système est défaillant. Il pourra le remplacer à moindre frais.

Comme le système selon l'invention permet, avant d'en valider l'exécution, de vérifier que les données critiques sélectionnées n'ont pas été corrompues, il réduit les risques critiques pour le drone. Le système peut ainsi être certifié à un niveau catastrophique même si certains de ses éléments ne sont pas (interface homme / machine C ou les moyens d'alerte D).

Préférentiellement, l'entité de commande A comporte en outre un dispositif de vérification 15 agencé pour vérifier l'intégrité numérique et sémantique des données sélectionnées 10 par l'opérateur à l'aide de l'interface homme / machine. La vérification d'intégrité numérique peut se faire via une fonction checksum et la vérification sémantique peut se faire via une vérification de cohérence sémantique à l'aide de règles sémantique. Préférentiellement, l'entité embarquée B1 comporte en outre un dispositif de vérification 11 agencé pour vérifier l'intégrité numérique et sémantique des données reçues par l'entité embarquée B1. Ici, la vérification des données est réalisée par le dispositif de vérification 11 qui est intégré dans l'entité embarquée B1. Cette vérification permet de détecter une corruption du message qui aurait pu se produire par exemple lors de la transmission de données.

Idéalement, l'entité embarquée B1 comporte des moyens de mémorisation 12 des données reçues et envoyées par l'entité de commande A. Ces données sont mémorisées à l'aide des moyens de mémorisation 12 en attente de validation par actionnement des moyens de validation E.

Le fonctionnement du système selon l'invention va maintenant être présenté, ce fonctionnement étant conforme à la méthode de communication selon l'invention.

Comme on le voit en particulier sur les figures 2a, 2b, 2c, les données 10 sont sélectionnées par l'opérateur à l'aide de l'interface homme/machine C.

Idéalement, les données sélectionnées sont vérifiées à l'aide du dispositif de vérification 15 qui appartient à l'entité de commande A.

Eventuellement, la vérification des données par le dispositif de vérification 15 peut être assortie d'un changement de format des données 10 afin de s'assurer que les données ont bien été vérifiées au niveau de l'entité de commande A. Les données 10 passent ici d'un premier format à un second format.

En cas d'échec de cette vérification par le dispositif de vérification 15, ces données 10 ne sont pas transmises et un message d'échec peut être généré via le moyens d'alerte D et/ou l'interface homme / machine C.

En cas de réussite de cette vérification, ces données 10 sont envoyées par l'entité de commande A vers l'entité embarquée B1 du drone B. Cet envoi est réalisé via le système de transfert de données G.

A réception de ces données 10 par l'entité embarquée B1, ces données 10 peuvent être, d'une part vérifiées par le dispositif de vérification 11 et d'autre part mémorisées par les moyens de mémorisation 12 des données 10 qui appartiennent à l'entité embarquée B1.

Cette mémorisation peut éventuellement être conditionnée par la réussite préalable de la vérification par le dispositif de vérification 11.

En cas de vérification des données par le dispositif de vérification 11 embarqué, cette vérification peut être assortie d'un changement de format des données 10 pour s'assurer que les données ont bien été vérifiées.

Au niveau de l'entité embarquée B1, les données 10 passent du second format à un troisième format. On note qu'il est possible de n'avoir qu'une seule vérification au niveau du dispositif de vérification 15 de l'entité de commande B1 ou alternativement au niveau du dispositif de vérification 11 de l'entité embarquée B1.

Comme illustré sur la figure 2b, l'entité embarquée B1 génère le message 20 à partir des données 10 qu'elle a reçues. Dans le cas particulier où l'on effectue une vérification et/ou un changement de format au niveau de l'entité embarquée B1, ce message 20 peut être généré à partir des données préalablement vérifiées et converties dans un nouveau format au niveau de l'entité embarquée B1. Ce message 20 est alors transmis de l'entité embarquée B1 vers l'entité de commande A via le système de transfert G.

Ce message 20 est reçu par l'entité de commande A et peut y être vérifié à l'aide d'un éventuel second dispositif de vérification appartenant à l'entité de commande A.

En cas d'échec de cette vérification, un message d'échec peut être généré via le moyens d'alerte D et/ou via l'interface homme / machine C.

En cas de réussite de cette vérification, le message 20 est envoyé vers le dispositif d'interprétation 13 qui l'interprète et le transforme en mots constituant le signal interprété Si. Le dispositif de synthèse vocale implanté au niveau du dispositif d'alerte D synthétise vocalement le signal interprété Si et délivre un signal S audio vocal via le haut-parleur D1. On note que dans un mode de réalisation particulier, lors de la vérification du message 20 par le second dispositif de vérification, le format du message 20 peut être modifié. Ce message 20 peut aussi être enregistré dans l'un au moins de ces formats au niveau d'une mémoire implantée dans l'entité de commande A et/ou reliée à cette entité de commande, par exemple implantée au niveau de l'interface homme/machine C.

Le dispositif d'interprétation interprète le message 20 converti dans le nouveau format, dit quatrième format. Le signal interprété Si par le dispositif d'interprétation 13 est alors transmis aux moyens d'alerte D qui génèrent le signal d'information S composé de plusieurs mots dans la langue de l'opérateur. Pour cela, les moyens d'alerte D peuvent comporter un afficheur de texte pour afficher le signal d'information S sous forme de texte et/ou peuvent comporter un dispositif de synthèse vocale pour synthétiser, à partir du signal interprété Si, le signal S sous forme audio vocale et le diffuser via le haut-parleur D1.

Alternativement, il est aussi possible de n'utiliser aucun second dispositif de vérification au niveau de l'entité de commande A. Dans ce cas, le message 20 peut être transmis tel que, ou éventuellement subir une conversion de format vers un quatrième format et être envoyé au dispositif d'interprétation 13. Le dispositif d'interprétation 13 interprète alors ce message 20, éventuellement converti dans le quatrième format, et génère le signal interprété Si qui est transmis aux moyens d'alerte D. Les moyens d'alerte D génèrent alors ledit signal d'information S qui comporte des mots représentatifs des données 10 contenues dans le message 20.

Comme illustré aux figures 2a, 2b, 2c, les données critiques courantes 10c, c'est-à-dire en cours et susceptibles d'être exécutées à l'aide d'actionneurs F du drone sans requérir une validation préalable de l'opérateur, peuvent être mémorisées dans une mémoire courante 14 appartenant à l'entité embarquée B1.

Ces données critiques courantes 10c sont susceptibles d'être modifiées / remplacées lorsque l'utilisateur décide de sélectionner de nouvelles données 10 à envoyer à l'entité de commande A. Selon le cas, ces données courantes 10c peuvent être dans le format de réception de données par l'entité embarquée ou préférentiellement dans le troisième format généré à l'occasion de la vérification effectuée au niveau de l'entité embarquée B1.

Comme illustré à la figure 2c, en réponse au signal d'information S, l'opérateur peut ou non agir sur les moyens de validation E qui sont préférentiellement des moyens certifiés selon une norme de criticité et qui sont reliés à l'entité de commande A.

Un moyen 16 de génération de message d'intention 21 implanté au niveau de l'entité de commande A est alors actionné par l'action de l'opérateur sur les moyens de validation E. Ce message d'intention 21 et/ou les données validées qui correspondent à ce message 21 peuvent être mémorisées au niveau d'une mémoire implantée dans l'entité de commande A et/ou au niveau d'un périphérique relié à cette entité de commande A, par exemple un périphérique de l'interface homme/machine C. L'intégrité numérique du message 21 ou des données contenues dans ce message 21 peut être vérifiée, par exemple par les moyens de génération 16 du message d'intention. Cette vérification d'intégrité numérique peut se faire via une fonction checksum. Outre cette vérification d'intégrité, les moyens de génération du message 16, peuvent aussi être agencés pour procéder au chiffrement et/ou à la signature et/ou à la datation de ces données du message 21. Ces données du message 21 ou ce message chiffré 21 peuvent ensuite être stockés dans une mémoire de l'entité Homme-Machine C et/ou dans une mémoire de l'entité de commande A. Une utilisation avantageuse de cet enregistrement du message 21 sera présentée par la suite.

Préférentiellement, le chiffrement est tel que seule(s) l'entité de commande A et éventuellement l'entité embarqué B1 peuvent déchiffrer et réutiliser ces données sans besoin d'une validation supplémentaire.

Ce message d'intention 21 généré par le moyen 16 est transmis de l'entité de commande A vers l'entité embarquée B1. A réception de ce message d'intention 21, si ce message est un message de validation, l'entité embarquée B1 commande la modification ou le remplacement des données courantes 10c par les données 10 préalablement mémorisées au niveau des moyens de mémorisation 12.

Les actions correspondantes pourront alors être exécutées et le drone pourra par exemple suivre une nouvelle trajectoire ou aller vers une nouvelle position.

A contrario, si l'opérateur considère que le signal d'information S représente des données 10 distinctes des données qu'il a préalablement sélectionnées, alors il en déduit qu'il y a eu corruption des données et il ne réalise pas l'action de validation. Dans le cas où le message d'intention 21 est un message de validation, ce message de validation ne sera pas généré et les données courantes critiques 10c ne seront pas modifiées au niveau de la mémoire courante 14.

Dans le cas où le message d'intention 21 est un message d'annulation, à réception de ce message 21, l'entité embarquée B1 interdit la modification des données courantes critiques 10c au niveau de la mémoire courante 14 ou commande l'exécution d'une procédure d'urgence préalablement enregistrée au niveau de l'entité embarquée B1.

Une telle procédure d'urgence enregistrée au niveau de l'entité embarquée B1 peut être mise en œuvre en cas d'absence de message d'intention21 au-delà d'une durée prédéterminée. Le décompte de cette durée prédéterminée peut être réalisé à l'aide d'une horloge de l'entité embarquée. Ce décompte peut être activé à compter de la réception des données par l'entité embarquée B1 ou à compter de l'émission du message 20 de l'entité embarquée vers l'entité de commande.

Ce décompte est interrompu et réinitialisé en cas de réception d'un message d'intention21.

Il est à noter qu'en l'absence de réception de données émise par l'unité de commande, l'entité embarquée B1 peut au bout d'un temps prédéterminé engager ladite procédure d'urgence.

La procédure d'urgence peut consister à charger une trajectoire à suivre en urgence ou à charger une position de destination du drone en cas d'urgence.

Il est à noter que des moyens de déclenchement de la procédure d'urgence (non représentés) peuvent être reliés à l'entité de commande pour permettre à l'opérateur de les activer par exemple via l'interface homme / machine et/ou via lesdits moyens de validation E.

Il est à noter que les moyens de validation E peuvent comporter un bouton certifié selon la norme de criticité.

La fréquence d'appui sur ce bouton ou la durée de l'appui peut conditionner l'activation des moyens de déclenchement de la procédure d'urgence.

Alternativement, un bouton spécifique à l'activation de la procédure d'urgence peut être relié aux moyens de déclenchement de cette procédure d'urgence. Idéalement, ce moyen spécifique sera aussi certifié suivant la norme de criticité.

Dans un mode de réalisation particulier, l'interface homme-machine C peut être agencée pour que la copie sauvegardée du message 21 préalablement chiffré, daté et signé au niveau de l'entité de commande A, puisse être envoyée vers l'entité embarquée B1 sur ordre de l'opérateur exprimé via l'interface Homme-Machine C. Dans ce cas, l'entité de commande A, sur ordre de l'interface Homme-Machine C, transmet ce message 21 à l'entité embarquée B1. Comme décrit précédemment, l'entité embarquée B1 commande la modification ou le remplacement des données courantes 10c par les données 10 préalablement mémorisées au niveau des moyens de mémorisation 12 et qui correspondent à ce message 21 envoyé sur ordre de l'interface Homme-Machine C. Ainsi, les actions correspondantes à ce message 21 transmis sur ordre de l'interface Homme-Machine C sont directement exécutées au niveau du drone B, sans devoir être à nouveau validées via les moyens de validation E.

En effet, comme ce message 21 avait fait l'objet d'une validation préalable via les moyens de validation E, l'entité embarquée B1 considère ce message 21 comme s'il avait été transmis directement par l'entité de commande A, sans qu'il y ait eu d'ordre d'exécution du message 21 passé via l'interface Homme-Machine C. Les actions sont ainsi exécutées directement sans requérir de validation complémentaire et cela même si l'ordre provient de l'interface Homme-Machine C.

## Revendications

1. Système (1) comprenant un drone (B) comprenant une entité embarquée (B1) à bord dudit drone (B), une entité de commande (A) du drone située à distance du drone (B), l'entité de commande (A) étant reliée à une interface homme / machine (C) adaptée pour permettre à un opérateur de sélectionner des instructions (10) à envoyer de l'entité de commande (A) vers l'entité embarquée (B1), l'entité embarquée (B1) étant adaptée à recevoir des instructions (10) envoyées par l'entité de commande (A) et à exécuter des actions en fonction des instructions (10) ainsi reçues par l'entité embarquée, **caractérisé en ce que** :
- l'entité embarquée (B1) est agencée pour générer un message (20) à partir des instructions (10) reçues par l'entité embarquée (B1) et transmettre ce message (20) à l'entité de commande (A) ;
- l'entité de commande (A) est agencée pour commander à des moyens d'alerte (D) la génération d'un signal d'information (S) représentatif dudit message (20) transmis par l'entité embarquée (B1) et reçu par l'entité de commande (A) ;
le système (1) comportant en outre des moyens de validation (E) reliés à l'entité de commande (A), l'entité de commande (A) étant en outre agencée pour, en fonction d'une action de l'opérateur sur lesdits moyens de validation (E) intervenue après la génération dudit signal d'information (S), transmettre à l'entité embarquée (B1) un message d'intention (21);
l'entité embarquée (B1) étant agencée pour conditionner, en fonction dudit message d'intention (21), l'exécution desdites actions qui correspondent aux instructions préalablement reçues par l'entité embarquée.

2. Système (1) selon la revendication 1, dans lequel l'interface homme / machine (C) comporte :
- des moyens de sélection (C1) choisis parmi des moyens de sélection tactile ou des moyens de sélection par commande vocale ; et
- au moins un moyen d'affichage (C2) pour afficher les instructions (10) sélectionnées à l'aide de l'interface homme / machine (C) ; et
les moyens d'alerte (D) comportent un haut-parleur (D1) pour délivrer ledit signal d'information (S) représentatif dudit message (20), ce signal d'information (S) étant alors un signal de type audio et/ou un afficheur visuel pour afficher le signal d'information (S), ce signal d'information (S) étant alors de type texte.

3. Système selon la revendication précédente, dans lequel l'entité de commande (A) comporte un dispositif d'interprétation (13) agencé pour interpréter le message généré par l'entité embarquée (B1) et pour délivrer aux moyens d'alerte (D) un signal interprété (Si) de type texte, lesdits moyens d'alerte (D) comportant un dispositif de synthèse vocale, ledit signal d'information (S) représentatif du message transmis par l'entité embarquée (B1) étant un signal audio vocal synthétisé par le dispositif de synthèse vocale à partir dudit signal interprété (Si) de type texte.

4. Système (1) selon l'une quelconque des revendications précédentes, dans lequel les instructions sélectionnées par l'opérateur sont des instructions influençant un changement de position ou de trajectoire du drone ou sont des instructions critiques pour différentes fonctions de vol du drone.

5. Système (1) selon l'une quelconque des revendications précédentes, dans lequel l'entité de commande (A) comporte en outre un dispositif de vérification (15) agencé pour vérifier l'intégrité numérique et sémantique des instructions sélectionnées par l'opérateur à l'aide de l'interface homme / machine.

6. Système (1) selon l'une quelconque des revendications précédentes, dans lequel l'entité embarquée (B1) comporte en outre un dispositif de vérification (11) agencé pour vérifier l'intégrité numérique et sémantique des instructions reçues par l'entité embarquée (B1).

7. Système (1) selon l'une quelconque des revendications précédentes, dans lequel l'entité embarquée (B1) comporte des moyens de mémorisation (12) des instructions reçues et envoyées par l'entité de commande (A).

8. Méthode de communication entre une entité de commande (A) d'un drone (B) située à distance du drone et une entité embarquée (B1) à bord dudit drone, l'entité de commande étant reliée à une interface homme / machine (C) pour permettre à un opérateur de sélectionner des instructions à envoyer de l'entité de commande (A) vers l'entité embarquée (B1), l'entité embarquée (B1) à bord du drone (B) étant adaptée à recevoir des instructions envoyées par l'entité de commande (A) et à exécuter des actions en fonction des instructions (10) ainsi reçues par l'entité embarquée (B1), **caractérisée en ce que** préalablement à l'exécution desdites actions :
- l'entité embarquée (B1) transmet un message (20) à l'entité de commande (A), ce message (20) étant généré à partir des instructions (10) reçues par l'entité embarquée (B1) ; puis
- l'entité de commande (A), commande à des moyens d'alerte (D), la génération d'un signal d'information (S) à l'attention de l'opérateur, ce signal d'information (S) étant représentatif dudit message (20) transmis par l'entité embarquée (B1) et reçu par l'entité de commande (A); puis
- en fonction d'une action de l'opérateur sur des moyens de validation (E) reliés à l'entité de commande (A), l'entité de commande (A) transmet à l'entité embarquée (B1) un message d'intention (21) ; puis
- en fonction dudit message d'intention (21), l'entité embarquée (B1) conditionne l'exécution desdites actions qui correspondent aux instructions préalablement reçues par l'entité embarquée (B1).

9. Méthode de communication selon la revendication précédente, dans laquelle l'interface homme / machine (C) comporte :
- des moyens de sélection (C1) choisis parmi des moyens de sélection tactile ou des moyens de sélection par commande vocale ; et
- au moins un moyen d'affichage (C2) pour afficher les instructions (10) sélectionnées à l'aide de l'interface homme / machine (C) ; et
les moyens d'alerte (D) comportent un haut-parleur (D1) pour délivrer ledit signal d'information (S) à l'attention de l'opérateur, ce signal d'information (S) étant alors un signal de type audio et/ou un afficheur visuel pour afficher le signal d'information (S), ce signal d'information (S) étant alors de type texte.

## Patentansprüche

1. System (1), umfassend eine Drohne (B), die eine Bordeinheit (B1) an Bord der genannten Drohne (B) umfasst, und eine Steuereinheit (A) zur Steuerung der Drohne, die sich in einem Abstand von der Drohne (B) befindet, wobei die Steuereinheit (A) mit einer Mensch/Maschinen-Schnittstelle (C) verbunden ist, die geeignet ist, einer Bedienperson zu ermöglichen, Anweisungen (10) zum Senden von der Steuereinheit (A) an die Bordeinheit (B1) auszuwählen, wobei die Bordeinheit (B1) geeignet ist, Anweisungen (10), die von der Steuereinheit (A) gesendet werden, zu empfangen und Aktionen in Abhängigkeit der so durch die Bordeinheit empfangenen Anweisungen (10) auszuführen, **dadurch gekennzeichnet, dass**:
- die Bordeinheit (B1) ausgebildet ist, um eine Nachricht (20) anhand der durch die Bordeinheit (B1) empfangenen Anweisungen (10) zu erzeugen und diese Nachricht (20) an die Steuereinheit (A) zu übertragen;
- wobei die Steuereinheit (A) ausgebildet ist, um Alarmmitteln (D) zu steuern, ein Informationssignal (S) zu erzeugen, das repräsentativ für die Nachricht (20) ist, die von der Bordeinheit (B1) übertragen und durch die Steuereinheit (A) empfangen wird;
wobei das System (1) ferner Validierungsmittel (E) umfasst, die mit der Steuereinheit (A) verbunden sind, wobei die Steuereinheit (A) ferner ausgebildet ist, um in Abhängigkeit von einer Aktion der Bedienperson an den genannten Validierungsmitteln (E), die nach der Erzeugung des Informationssignals (S) stattfindet, eine Absichtsnachricht (21) an die Bordeinheit (B1) zu übertragen;
wobei die Bordeinheit (B1) ausgebildet ist, um in Abhängigkeit von der Absichtsnachricht (21) die Ausführung der genannten Aktionen zu konditionieren, die den durch die Bordeinheit zuvor empfangenen Anweisungen entsprechen.

2. System (1) nach Anspruch 1, bei dem die Mensch/Maschinen-Schnittstelle (C) umfasst:
- Auswahlmittel (C1), die unter Mitteln zur taktilen Auswahl oder Mitteln zur Auswahl durch Sprachsteuerung ausgewählt werden; und mindestens ein Anzeigemittel (C2) zum Anzeigen der Anweisungen (10), die mit Hilfe der Mensch/Maschinen-Schnittstelle (C) ausgewählt werden; und
die Alarmmittel (D) einen Lautsprecher (D1) umfassen, um das genannte Informationssignal (S), das repräsentativ für die genannte Nachricht (20) ist, zu liefern, wobei dieses Informationssignal (S) dann ein Signal vom Typ Audiosignal und/oder eine visuelle Anzeige zum Anzeigen des Informationssignals (S) ist, wobei dieses Informationssignal (S) dann vom Typ Textsignal ist.

3. System nach dem vorhergehenden Anspruch, bei dem die Steuereinheit (A) eine Interpretationsvorrichtung (13) umfasst, die ausgebildet ist, um die von der Bordeinheit (B1) erzeugte Nachricht zu interpretieren und um ein interpretiertes Signal (Si) vom Typ Textsignal an die Alarmmittel (D) zu liefern, wobei die genannten Alarmmittel (D) eine Sprachsynthesevorrichtung umfassen, wobei das genannte Informationssignal (S), das repräsentativ für die von der Bordeinheit (B1) übertragene Nachricht ist, ein von der Sprachsynthesevorrichtung anhand des interpretieren Signals (Si) vom Typ Textsignal synthetisiertes Audiosprachsignal ist.

4. System (1) nach einem der vorhergehenden Ansprüche, bei dem die von der Bedienperson ausgewählten Anweisungen Anweisungen sind, die einen Positionswechsel oder einen Bahnwechsel der Drohne beeinflussen, oder kritische Anweisungen für verschiedene Flugfunktionen der Drohne sind.

5. System (1) nach einem der vorhergehenden Ansprüche, bei dem die Steuereinheit (A) ferner eine Verifizierungsvorrichtung (15) umfasst, die ausgebildet ist, um die digitale und semantische Integrität der von der Bedienperson mittels der Mensch/Maschinen-Schnittstelle ausgewählten Anweisungen zu verifizieren.

6. System (1) nach einem der vorhergehenden Ansprüche, bei dem die Bordeinheit (B1) ferner eine Verifizierungsvorrichtung (11) umfasst, die ausgebildet ist, um die digitale und semantische Integrität der durch die Bordeinheit (B1) empfangenen Anweisungen zu verifizieren.

7. System (1) nach einem der vorhergehenden Ansprüche, bei dem die Bordeinheit (B1) Speichermittel (12) zum Speichern der von der Steuereinheit (A) empfangenen und gesendeten Anweisungen umfasst.

8. Kommunikationsverfahren zur Kommunikation zwischen einer Steuereinheit (A) einer Drohne (B), die sich in einem Abstand von der Drohne befindet, und einer Bordeinheit (B1) an Bord der Drohne, wobei die Steuereinheit mit einer Mensch/Maschinen-Schnittstelle (C) verbunden ist, um einer Bedienperson zu ermöglichen, Anweisungen zum Senden von der Steuereinheit (A) an die Bordeinheit (B1) auszuwählen, wobei die Bordeinheit (B1) an Bord der Drohne (B) geeignet ist, von der Steuereinheit (A) gesendete Anweisungen zu empfangen und Aktionen in Abhängigkeit von so von der Bordeinheit empfangenen Anweisungen (10) auszuführen, **dadurch gekennzeichnet, dass** vor der Ausführung der genannten Aktionen:
- die Bordeinheit (B1) eine Nachricht (20) an die Steuereinheit (A) überträgt, wobei diese Nachricht (20) anhand der Anweisungen (10) erzeugt wird, die durch die Bordeinheit (B1) empfangen werden; und dann
- die Steuereinheit (A) die Alarmmittel (D) steuert, ein Informationssignal (S) für die Bedienperson zu erzeugen, wobei dieses Informationssignal (S) repräsentativ für die Nachricht (20) ist, die von der Bordeinheit (B1) übertragen und von der Steuereinheit (A) empfangen wird; und dann
- in Abhängigkeit von einer Aktion der Bedienperson an den Validierungsmitteln (E), die mit der Steuereinheit (A) verbunden sind, die Steuereinheit (A) eine Absichtsnachricht (21) an die Bordeinheit (B1) überträgt; und dann
- in Abhängigkeit der Absichtsnachricht (21) die Bordeinheit (B1) die Ausführung der genannten Aktionen konditioniert, die den von der Bordeinheit (B1) zuvor empfangenen Anweisungen entsprechen.

9. Kommunikationsverfahren nach dem vorhergehenden Anspruch, bei dem die Mensch/Maschinen-Schnittstelle (C) umfasst:
- Auswahlmittel (C1), die unter Mitteln zur taktilen Auswahl oder Mitteln zur Auswahl durch Sprachsteuerung ausgewählt werden; und
- mindestens ein Anzeigemittel (C2) zum Anzeigen der Anweisungen (10), die mit Hilfe der Mensch/Maschinen-Schnittstelle (C) ausgewählt werden; und
die Alarmmittel (D) einen Lautsprecher (D1) umfassen, um das genannte Informationssignal (S) für die Bedienperson zu liefern, wobei dieses Informationssignal (S) dann ein Signal vom Typ Audiosignal und/oder eine visuelle Anzeige zum Anzeigen des Informationssignals (S) ist, wobei dieses Informationssignal (S) dann vom Typ Textsignal ist.

## Claims

1. A system (1) comprising a drone (B) having an onboard entity (B1) on board said drone (B) and a control entity (A) for controlling the drone and situated remotely from the drone (B), the control entity (A) being connected to a human-machine interface (C) adapted to enable an operator to select instructions (10) for sending from the control entity (A) to the onboard entity (B1), the onboard entity (B1) being adapted to receive the instructions (10) sent by the control entity (A) and to execute actions as a function of the instructions (10) as received in this way by the onboard entity, the system being **characterized in that**:
- the onboard entity (B1) is arranged to generate a message (20) from the instructions (10) received by the onboard entity (B1) and to transmit this message (20) to the control entity (A); and
- the control entity (A) is arranged to control warning means (D) to generate an information signal (S) representative of said message (20) transmitted by the onboard entity (B1) and received by the control entity (A) ;
the system (1) further comprising validation means (E) connected to the control entity (A), the control entity (A) also being arranged to act as a function of the operator acting on said validation means (E) after said information signal S has been generated in order to transmit an intention message (21) to the onboard entity (B1); and
the onboard entity (B1) being arranged to make execution of said actions conditional as a function of said intention message (21), which actions correspond to the instructions previously received by the onboard entity.

2. A system (1) according to claim 1, wherein the human-machine interface (C) comprises:
- selection means (C1) selected from hand-controlled selection means and voice-controlled selection means; and
- at least one display means (C2) for displaying the instructions (10) selected using the human-machine interface (C); and
the warning means (D) include a loudspeaker (D1) for delivering said information signal (S) representative of said message (20), the information signal (S) then being a signal of audio type, and/or a visual display for displaying the information signal (S), the information signal (S) then being of text type.

3. A system (1) according to the preceding claim, wherein the control entity (A) includes an interpretation device (13) arranged to interpret the message generated by the onboard entity (B1) and to deliver a text-type interpreted message (Si) to the warning means (D), said warning means (D) including a voice synthesis device, said information signal (S) representative of the message transmitted by the onboard entity (B1) being an audio voice signal synthesized by the voice synthesis device on the basis of said text-type interpreted message (Si).

4. A system (1) according to any preceding claim, wherein the instructions selected by the operator are instructions having an influence on a change in the position or the path of the drone or are instructions that are critical for various flight functions of the drone.

5. A system (1) according to any preceding claim, wherein the control entity (A) further includes a verification device (15) arranged to verify the digital and semantic integrity of the instructions selected by the operator using the human-machine interface.

6. A system (1) according to any preceding claim, wherein the onboard entity (B1) further includes a verification device (11) arranged to verify the digital and/or semantic integrity of the instructions received by the onboard entity (B1).

7. A system (1) according to any preceding claim, wherein the onboard entity (B1) includes storage means (12) for storing the received instructions as sent by the control entity (A).

8. A method of communication between a control entity (A) for controlling a drone (B) situated remotely from the drone and an onboard entity (B1) on board said drone, the control entity being connected to a human-machine interface (C) in order to enable an operator to select instructions for sending from the control entity (A) to the onboard entity (B1), the onboard entity (B1) on board the drone (B) being adapted to receive the instructions sent by the control entity (A) and to execute actions as a function of the instructions (10) as received in this way by the onboard entity (B1), the method being **characterized in that** prior to executing said actions:
- the onboard entity (B1) transmits a message (20) to the control entity (A), the message (20) being generated from the instructions (10) received by the onboard entity (B1); then
- the control entity (A) controls warning means (D) to generate an information signal (S) for the attention of the operator, the information signal (S) being representative of said message (20) transmitted by the onboard entity (B1) and received by the control entity (A); then
- the control entity (A) transmits an intention message (21) to the onboard entity (B1) as a function of an action by the operator on validation means (E) connected to the control entity (A); and then
- the onboard entity (B1) undertakes execution of said actions that correspond to the instructions previously received by the onboard entity (B1) as a function of said intention message (21).

9. A method of communication according to the preceding claim, wherein the human-machine interface (C) includes:
- selection means (C1) selected from hand-controlled selection means and voice-controlled selection means; and
- at least one display means (C2) for displaying the instructions (10) selected using the human-machine interface (C); and
the warning means (D) including a loudspeaker (D1) for delivering said information signal (S) for the attention of the operator, the information signal (S) then being a signal of audio type, and/or a visual display for displaying the information signal (S), the information signal (S) then being of text type.
